# EUROPEAN PATENT SPECIFICATION

(11) **EP 3 527 454 B1**
(45) Date of publication and mention of the grant of the patent: **15.04.2020**
(21) Application number: 17860389.0
(22) Date of filing: 11.10.2017
(51) Int. Cl.: G05D 1/00, B60W 50/08, B60W 40/08, G08G 1/09, G08G 1/16, B60K 28/06, B60W 50/029

(54) **VEHICLE SYSTEM**
FAHRZEUGSYSTEM
SYSTÈME DE VÉHICULE

(30) Priority: 12.10.2016 JP 2016200779
(43) Date of publication of application: 21.08.2019
(73) Proprietor: Yazaki Corporation, Minato-ku Tokyo 108-8333 (JP)
(72) Inventor: OGURA, Hiroyuki, Makinohara-shi Shizuoka 421-0407 (JP)
(74) Representative: Grünecker Patent- und Rechtsanwälte PartG mbB
(86) International application number: PCT/JP2017/036865
(87) International publication number: WO 2018/070440

(56) References cited:
- WO-A1-2016/038931
- DE-A1-102014 210 147
- JP-A- 2002 163 799
- JP-A- 2002 203 065
- JP-A- 2009 080 718
- JP-A- 2009 227 250
- JP-A- 2016 130 897
- US-A1- 2016 139 594

## Description

### Field

The present invention relates to a vehicle system.

### Background

There is proposed a vehicle in which it is possible to perform both manual driving of driving the vehicle through an operation of a vehicle operating device by a driver and automated driving of driving the vehicle automatically without an operation of the vehicle operating device by the driver. In the vehicle in which it is possible to perform the manual driving and the automated driving, switching between the manual driving and the automated driving is also performed. A feeling or skill of a driver, a situation determination result in a vehicle, or the like is used as a condition for switching between manual driving and automated driving (see Patent Literatures 1 and 2).

### Citation List

### Patent Literature

Patent Literature 1: Japanese Patent Application Laid-open No. 2015-110417
Patent Literature 2: Japanese Patent Application Laid-open No. 2015-133050
US 2016/139594 A1 discloses a a vehicle having an autonomous mode and a manual operating mode. The vehicle can be operated remotely when reaching an unexpected environment. If the driver does not approve the remote mode or the driver is sleeping, the remote mode is automatically engaged if autonomous mode is not available

DE 10 2014 210147 A1 discloses a vehicle receiving sensor signal from a surrounding vehicle when own sensors fail and following the trajectory of a surrounding vehicle if the driver is not ready to take over control of the vehicle.

### Summary

### Technical Problem

Incidentally, in a situation in which it is not possible to continue automated driving during the automated driving in a vehicle in which it is possible to perform manual driving and automated driving, driving is switched to the manual driving. When the driving is switched from the automated driving to the manual driving, an occupant in the vehicle is not appropriate as a driver in some cases. In this case, it is difficult to switch from the automated driving to the manual driving, the state of the automated driving is maintained, or the vehicle is forcibly stopped.

The present invention has been made with consideration for such a circumstance, and an object thereof is to provide a vehicle system that is capable of continuing driving of a vehicle even in a case where an occupant in the vehicle is not appropriate as a driver when driving is switched from automated driving to manual driving.

### Solution to Problem

In order to achieve the above mentioned object, a vehicle system according to the present invention includes one or more vehicles that include an occupant appropriateness detecting device that detects appropriateness of an occupant as a driver, a vehicle-side operation device that is operated by the occupant for driving the vehicle, a vehicle-side control device that controls a traveling condition of the vehicle, and a vehicle-side communication device that transmits and receives information to and from outside of the vehicle; and a control center that is provided outside of the vehicle and includes a center-side communication device that transmits and receives information to and from the vehicle, and a center-side control device that controls the traveling condition of the vehicle via the vehicle-side control device, wherein the vehicle-side control device controls the traveling condition of the vehicle in any driving mode of a manual driving mode of controlling the traveling condition of the vehicle through an operation of the vehicle-side operation device by the occupant, an automated driving mode of controlling the traveling condition of the vehicle without an operation of the vehicle-side operation device by the occupant, and a center driving mode of controlling the traveling condition of the vehicle by the center-side control device, and in a case where a mode change is performed from the automated driving mode to the manual driving mode, the mode change is performed to the manual driving mode in the case of determining that the occupant detected by the occupant appropriateness detecting device has appropriateness as a driver, and the mode change is performed to the center driving mode in the case of determining that the occupant does not have appropriateness as a driver.

In the vehicle system, it is preferable that the control center includes a remote operation device with which a remote operator operates the vehicle, and the center-side control device controls the traveling condition of the vehicle based on an operation amount of an operation of the vehicle by the remote operator using the remote operation device in the center driving mode.

The vehicle system according to the invention includes a vehicle condition detecting device that detects a condition of the vehicle, the vehicle-side control device determines abnormality of the vehicle based on the condition of the vehicle detected by the vehicle condition detecting device, the vehicle-side communication device transmits vehicle abnormality information to the control center when the vehicle-side control device determines that the vehicle is abnormal, and when the center-side control device acquires the vehicle abnormality information, the center-side control device transmits positional information of the vehicle, in which the abnormality is detected, to another vehicle different from the vehicle, in which the abnormality is detected, and performs an alternative vehicle process of causing the vehicle-side control device of the other vehicle to perform the automated driving mode based on the positional information of the vehicle in which the abnormality is detected.

In the vehicle system, it is preferable that the vehicle includes a vehicle part condition detecting device that detects a condition of a vehicle part that configures the vehicle, the vehicle-side communication device transmits at least vehicle part condition information indicating the condition of the vehicle part detected by the vehicle part condition detecting device to the control center, the control center includes a storage device that stores the vehicle part condition information in at least the one or more vehicles, and a vehicle part abnormality predicting device that predicts abnormality of the vehicle part based on the vehicle part condition information that is stored in the storage device, and the vehicle-side control device performs a mode change from the automated driving mode to the manual driving mode or the center driving mode in a case where the vehicle part abnormality predicting device predicts abnormality of the vehicle part.

In the vehicle system, it is preferable that the occupant appropriateness detecting device detects at least biological information of the occupant, the vehicle-side communication device transmits at least the biological information detected by the occupant appropriateness detecting device to the control center, the control center includes a storage device that stores the biological information in at least the one or more vehicles, and an occupant abnormality predicting device that predicts abnormality of the occupant based on the biological information that is stored in the storage device, and the vehicle-side control device performs a mode change from the manual driving mode to the automated driving mode or the center driving mode in a case where the occupant abnormality predicting device predicts abnormality of the occupant.

### Advantageous Effects of Invention

In a vehicle system according to the present invention, in a case where an occupant in a vehicle does not have appropriateness as a driver, a mode change is performed from an automated driving mode to a center driving mode, and a center-side control device controls a traveling condition of the vehicle. Therefore, even in a case where the occupant in the vehicle does not have appropriateness as a driver, an effect that it is possible to continue driving of the vehicle is achieved.

### Brief Description of Drawings

FIG. 1 is a block diagram of a vehicle system according to an embodiment.
FIG. 2 is a flowchart illustrating an operation flow of the vehicle system according to the embodiment.
FIG. 3 is a flowchart illustrating an operation flow of the vehicle system according to the embodiment.
FIG. 4 is a flowchart illustrating an operation flow of the vehicle system according to the embodiment. Description of Embodiments

Hereinafter, an embodiment of a vehicle system according to the invention will be described in detail with reference to the drawings. Incidentally, the invention is not limited to the embodiment. In addition, configurational elements in the following embodiment include an element that can be easily assumed by those skilled in the art or a substantially identical element. In addition, the configurational elements in the following embodiment can be omitted, substituted, and modified in various manners within a range without departing from the gist of the invention.

### [Embodiment]

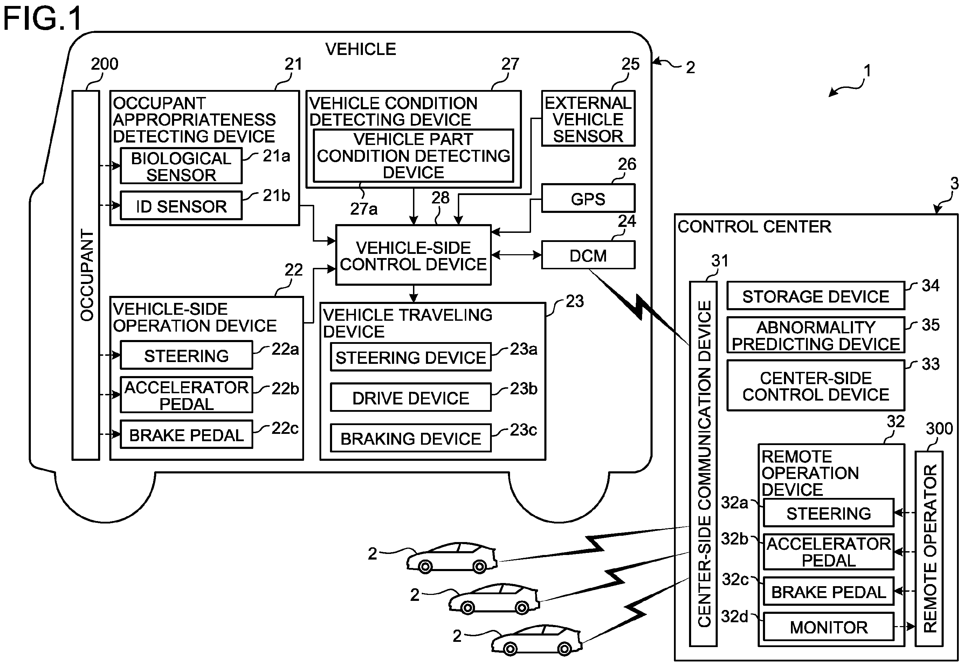

The vehicle system according to the embodiment is described. FIG. 1 is a block diagram of the vehicle system according to the embodiment. A vehicle system 1 according to the embodiment includes a vehicle 2 and a control center 3 as illustrated in FIG. 1.

The vehicle 2 transports an occupant 200 to a destination and includes an occupant appropriateness detecting device 21, a vehicle-side operation device 22, a vehicle traveling device 23, a DCM 24, an external vehicle sensor 25, a GPS 26, a vehicle condition detecting device 27, and a vehicle-side control device 28. The vehicle 2 in the embodiment is an electric vehicle (EV) including a motor (not illustrated) as a drive source in the vehicle traveling device 23 and an autonomous cruising vehicle that is capable of causing the vehicle 2 to travel to a target position based on current positional information detected by the GPS 26. In the embodiment, a plurality of vehicles 2 is under control of the single control center 3, and a vehicle model or a grade of the vehicles 2 may be the same as or different from each other; however the vehicles have the above-described configuration of the vehicle 2.

The occupant appropriateness detecting device 21 detects appropriateness of the occupant 200 as a driver. The occupant appropriateness detecting device 21 includes a biological sensor 21a and an ID sensor 21b. The biological sensor 21a detects a value related to a physical condition and a condition of the occupant 200 for determining that the physical condition, the condition, and the like of the occupant 200 are appropriate as a driver, such as a body temperature, a pulse, an arousal level, a blood-alcohol concentration, or an amount of perspiration of the occupant 200 as biological information, for example. The ID sensor 21b detects ID information of a license card that is possessed by the occupant 200 and allows driving of the vehicle 2, in order to determine that the occupant has the appropriateness as a driver depending on a qualification of the occupant 200 for driving the vehicle 2. The occupant appropriateness detecting device 21 is connected to the vehicle-side control device 28 and outputs the biological information and the ID information of the occupant 200 to the vehicle-side control device 28.

The vehicle-side operation device 22 is operated by the occupant 200 as a driver for performing manual driving of the vehicle 2. The vehicle-side operation device 22 includes a steering 22a, an accelerator pedal 22b, and a brake pedal 22c. The steering 22a is rotatably supported and turns the vehicle 2 when the occupant 200 performs a rotation operation by hand, and the steering changes a turning angle of a steering wheel (mostly, a front wheel) of the vehicle 2. A steering angle of the steering 22a is detected by a rotation angle sensor (not illustrated). The accelerator pedal 22b is swingably supported and causes the vehicle to move forward and backward when the pedal is pressed by a leg of the occupant 200 and the vehicle 2 is accelerated, and the accelerator pedal changes a drive force in a drive wheel (mostly, a front wheel or a rear wheel) of the vehicle 2. An accelerator pressing amount of the accelerator pedal 22b is detected by a pressing amount sensor (not illustrated). The brake pedal 22c is swingably supported and causes the vehicle 2 to be decelerated and stopped when the pedal is pressed by a leg of the occupant 200, and the brake pedal changes a braking force in every wheel of the vehicle 2. A brake pressing amount of the brake pedal 22c is detected by the pressing amount sensor (not illustrated). The vehicle-side operation device 22 is connected to the vehicle-side control device 28 and outputs, to the vehicle-side control device 28, operation amounts such as the steering angle, the accelerator pressing amount, and the brake pressing amount by which it is possible to control traveling of the vehicle 2.

The vehicle traveling device 23 is provided to cause the vehicle 2 to travel and includes a steering device 23a, a drive device 23b, and a braking device 23c. For example, the steering device 23a is a steering device that changes a turning angle of a steering wheel of the vehicle 2 by a steering actuator such as a motor. For example, the drive device 23b generates a drive force in the drive wheels of the vehicle 2 and has a motor as a drive source, a battery that supplies electric power to the motor, a transmission or the like that transmits the drive force to the drive wheels from the motor. For example, the braking device 23c is a hydraulic brake device that causes a brake pad to come into contact with a brake rotor by hydraulic pressure generated by a braking actuator. The vehicle traveling device 23 is connected to the vehicle-side control device 28, the operation amounts such as the steering angle, the accelerator pressing amount, and the brake pressing amount are input to the steering device 23a, the drive device 23b, and the braking device 23c, respectively, from the vehicle-side control device 28, and steering control, drive control, and braking control are performed by the steering device 23a, the drive device 23b, and the braking device 23c, respectively, based on the operation amounts.

The DCM 24 is a data communication module, that is, a wireless communication functional part, wirelessly connects the vehicle 2 and the outside of the vehicle, and performs transmission and reception of information between the vehicle 2 and the outside of the vehicle. The DCM 24 in the embodiment transmits and receives information to and from the control center 3 via a center-side communication device 31. The DCM 24 communicates with communication equipment on the outside of the vehicle in a wide-area wireless and a narrow-area wireless manner. Incidentally, examples of wide-area wireless systems include a radio (AM or FM), a TV (UHF, 4K, or 8K), a TEL, a GPS, or WiMAX (registered trademark). In addition, examples of narrow-area wireless systems include ETC/DSRC, VICS (registered trademark), a wireless LAN, or millimeter-wave communication. The DCM 24 is connected to the vehicle-side control device 28 and is capable of transmitting and receiving information to and from the vehicle-side control device 28, and the control center 3 is capable of acquiring information such as biological information, vehicle surrounding information to be described below, positional information, vehicle abnormality information, vehicle condition information, or vehicle part condition information input to the vehicle-side control device 28, for example.

The external vehicle sensor 25 detects a situation outside the vehicle, that is, a surrounding situation of the vehicle. For example, the external vehicle sensor 25 is a camera, a millimeter-wave radar, an infrared radar, or the like and mostly detects the surrounding situation of the vehicle as an image. The external vehicle sensor 25 is connected to the vehicle-side control device 28 and outputs the detected surrounding situation of the vehicle as vehicle surrounding information to the vehicle-side control device 28.

The GPS 26 detects a current position of the vehicle 2. The GPS 26 is connected to the vehicle-side control device 28 and outputs the detected current position of the vehicle 2 as the positional information to the vehicle-side control device 28.

The vehicle condition detecting device 27 detects a condition of the vehicle 2 and detects conditions of various devices and various sensors which are mounted on the vehicle 2. When abnormality occurs, the vehicle condition detecting device 27 in the embodiment mainly detects conditions of a device and a sensor which are not capable of controlling a traveling condition of the vehicle 2 in various driving modes to be described below which are performed by the vehicle-side control device 28. The vehicle condition detecting device 27 is connected to the vehicle-side control device 28 and outputs the detected condition of the vehicle 2 as vehicle condition information to the vehicle-side control device 28. The vehicle condition detecting device 27 includes a vehicle part condition detecting device 27a. The vehicle part condition detecting device 27a detects a condition of a vehicle part (not illustrated) that configures the vehicle 2. Here, the vehicle part means a part that supplies electric power to various devices and various sensors such as a junction box or a fuse box which are mounted on the vehicle 2 or a part that inputs and outputs a signal to and from various devices or various sensors. For example, the vehicle part condition detecting device 27a in the embodiment is a current sensor that detects a current that flows to the vehicle part. The vehicle part condition detecting device 27a is connected to the vehicle-side control device 28 and outputs the detected condition of the vehicle part as vehicle part condition information to the vehicle-side control device 28.

The vehicle-side control device 28 controls the traveling condition of the vehicle 2. A manual driving mode, an automated driving mode, and a center driving mode are set in advance as driving modes for controlling the traveling condition of the vehicle 2, and the vehicle-side control device 28 controls the traveling condition of the vehicle 2 in any driving mode. In the manual driving mode, the traveling condition of the vehicle 2 is controlled through an operation of the vehicle-side operation device 22 by the occupant 200. In the manual driving mode in the embodiment, the vehicle-side control device 28 controls the vehicle traveling device 23 on the basis of the operation amount output to the vehicle-side control device 28 through an operation of the vehicle-side operation device 22 by the occupant 200. In the automated driving mode, the traveling condition of the vehicle 2 is controlled without an operation of the vehicle-side operation device 22 by the occupant 200. In the automated driving mode in the embodiment, the vehicle-side control device 28 controls the vehicle traveling device 23 on the basis of the operation amount calculated by the vehicle-side control device 28 on the basis of a traveling route and the vehicle surrounding information based on a target position set through a setting device (not illustrated) by the occupant 200 or a target position that is set in advance and map information that is stored in a storage device (not illustrated). In the center driving mode, a center-side control device 33 to be described below controls the traveling condition of the vehicle 2. In the center driving mode in the embodiment, the center-side control device 33 controls the vehicle traveling device 23 on the basis of the operation amount output to the center-side control device 33 through an operation of a remote operation device 32 by a remote operator 300 to be described below. In a case where a mode change is performed from the automated driving mode to the manual driving mode, the vehicle-side control device 28 performs the mode change to the manual driving mode in the case of determining that the occupant 200 detected by the occupant appropriateness detecting device 21 has appropriateness as a driver and the mode change to the center driving mode in the case of determining that the occupant 200 does not have appropriateness as a driver. The vehicle-side control device 28 in the embodiment determines the appropriateness of the occupant 200 on the basis of the biological information and the ID information and determines that the occupant 200 has the appropriateness as a driver in a case where a physical condition, a condition, and the like of the occupant 200 are appropriate as a driver and the occupant 200 has a qualification that allows the occupant to drive the vehicle 2. Hence, the vehicle-side control device 28 determines that the occupant 200 does not have the appropriateness as a driver in a case where the occupant 200 has a sleepy condition, an unconscious condition, or a drinking condition or does not have the qualification that allows the occupant to drive the vehicle 2, for example.

The vehicle-side control device 28 determines abnormality of the vehicle 2 on the basis of the condition of the vehicle 2 detected by the vehicle condition detecting device 27. The vehicle-side control device 28 in the embodiment determines whether or not it is possible to perform the driving modes on the basis of the input vehicle condition information. When the vehicle-side control device 28 determines that it is not possible to perform any of the driving modes, the vehicle-side control device 28 causes the DCM 24 to transmit the vehicle abnormality information to the control center 3. The vehicle-side control device 28 performs a mode change from the automated driving mode to the manual driving mode or the center driving mode, that is, restricts the automated driving mode, in a case where an abnormality predicting device 35 to be described below predicts abnormality of the vehicle part. The vehicle-side control device 28 performs a mode change from the manual driving mode to the automated driving mode or the center driving mode, that is, restricts the manual driving mode, in a case where the abnormality predicting device 35 to be described below predicts abnormality of the occupant 200. Here, a hardware configuration of the vehicle-side control device 28 is well known as an electronic control unit including a CPU, a ROM, a RAM, and an interface. Incidentally, the vehicle-side control device 28 may be configured of a single electronic control unit or a plurality of electronic control units. Incidentally, in the case of switching the driving mode, the vehicle-side control device 28 notifies the occupant 200 in a vehicle interior of the vehicle 2 by a notifying device (not illustrated). In addition, the vehicle-side control device 28 notifies a current mode (not illustrated) by a vehicle outside notifying device to the outside of the vehicle 2 according to the driving mode.

The control center 3 is installed outside the vehicle, controls one or more vehicles 2, and includes the center-side communication device 31, the remote operation device 32, the center-side control device 33, a storage device 34, and the abnormality predicting device 35.

The center-side communication device 31 is wirelessly connected to the DCM 24 and transmits and receives information to and from the one or more vehicles 2. The center-side communication device 31 in the embodiment transmits and receives information to and from the vehicle 2 via communication equipment, an Internet network, and a leased line network on the outside of the vehicle. The center-side communication device 31 is connected to the remote operation device 32, the center-side control device 33, and the storage device 34, and the remote operation device 32 and the center-side control device 33 acquire at least a part of the information such as the biological information, the vehicle surrounding information, the positional information, the vehicle abnormality information, the vehicle condition information, or the vehicle part condition information, for example, input to the vehicle-side control device 28 which is transmitted from the DCM 24. Additionally, at least a part of the information is stored in the storage device 34.

The remote operation device 32 is operated by the remote operator 300 as a driver for performing remote manual driving of the vehicle 2. The remote operation device 32 includes a steering 32a, an accelerator pedal 32b, a brake pedal 32c, and a monitor 32d. The steering 32a is rotatably supported and turns the vehicle 2 remotely when the remote operator 300 performs a rotation operation by hand, and a steering angle is detected by a rotation angle sensor (not illustrated). The accelerator pedal 22b is swingably supported and causes the vehicle to move forward and backward when the pedal is pressed by a leg of the remote operator 300 and the vehicle 2 is accelerated remotely, and an accelerator pressing amount is detected by a pressing amount sensor (not illustrated). The brake pedal 22c is swingably supported and causes the vehicle 2 to be decelerated and stopped when the pedal is pressed by a leg of the remote operator 300, and a brake pressing amount is detected by the pressing amount sensor (not illustrated). The monitor 32d displays the vehicle surrounding information and the vehicle condition information acquired by the control center 3. In this manner, the remote operator 300 recognizes the vehicle surrounding information and the vehicle condition information displayed on the monitor 32d, thereby, operating the steering 32a, the accelerator pedal 32b, and the brake pedal 32c. The remote operation device 32 is connected to the center-side control device 33 and outputs, to the center-side control device 33, operation amounts such as the steering angle, the accelerator pressing amount, and the brake pressing amount by which it is possible to control traveling of the vehicle 2 remotely.

The center-side control device 33 performs the center driving mode of controlling the traveling condition of the vehicle 2 via the vehicle-side control device 28. The center-side control device 33 in the embodiment controls the traveling condition of the vehicle 2 via the vehicle-side control device 28, on the basis of the operation amount of an operation of the vehicle 2 by the remote operator 300 using the remote operation device 32 in the center driving mode. The center-side control device 33 performs an alternative vehicle process when acquiring the vehicle abnormality information. The alternative vehicle process is performed under control of the control center 3 and is a process in which the center-side communication device 31 transmits positional information of the vehicle 2, in which the acquired abnormality is detected, to another vehicle 2 different from the vehicle 2, in which the abnormality is detected, and a target position is set to the vehicle-side control device 28 of the other vehicle 2 based on the positional information of the vehicle 2, in which the abnormality received by the DCM 24 is detected, and the automated driving mode is performed.

The storage device 34 stores information of the one or more vehicles 2 which is received by the center-side communication device 31. The storage device 34 in the embodiment stores the biological information, the vehicle condition information, vehicle part condition information, and the like, one by one, which are acquired from the vehicles 2 under control of the control center 3. Here, the storage device 34 is a server storage that is configured of a plurality of hard disks, for example, and may be installed in the same facility in which the control center 3 is installed or may be installed to be distributed to other facilities.

The abnormality predicting device 35 is an occupant abnormality predicting device and a vehicle part abnormality predicting device. The abnormality predicting device 35 predicts abnormality of the occupant 200 on the basis of the biological information that is stored in the storage device 34. The abnormality predicting device 35 predicts abnormality of the vehicle part of the vehicle 2 on the basis of the vehicle part condition information that is stored in the storage device 34. The abnormality predicting device 35 analyzes the biological information that is stored and accumulated in the storage device 34, obtains a pattern from a time-series change of the biological information, picks out an occupant abnormality pattern in which the occupant 200 has abnormality, that is, does not have the appropriateness as a driver, and determines whether or not the change of the acquired biological information is identical with the occupant abnormality pattern, thereby predicting the abnormality of the occupant 200. The abnormality predicting device 35 analyzes the vehicle part condition information that is stored and accumulated in the storage device 34, obtains a pattern from a time-series change of the vehicle part condition information such as a current value, picks out a vehicle part abnormality pattern in which the vehicle part has abnormality, and determines whether or not the change of the acquired vehicle part condition information is identical with the vehicle part abnormality pattern, thereby predicting the abnormality of the vehicle part.

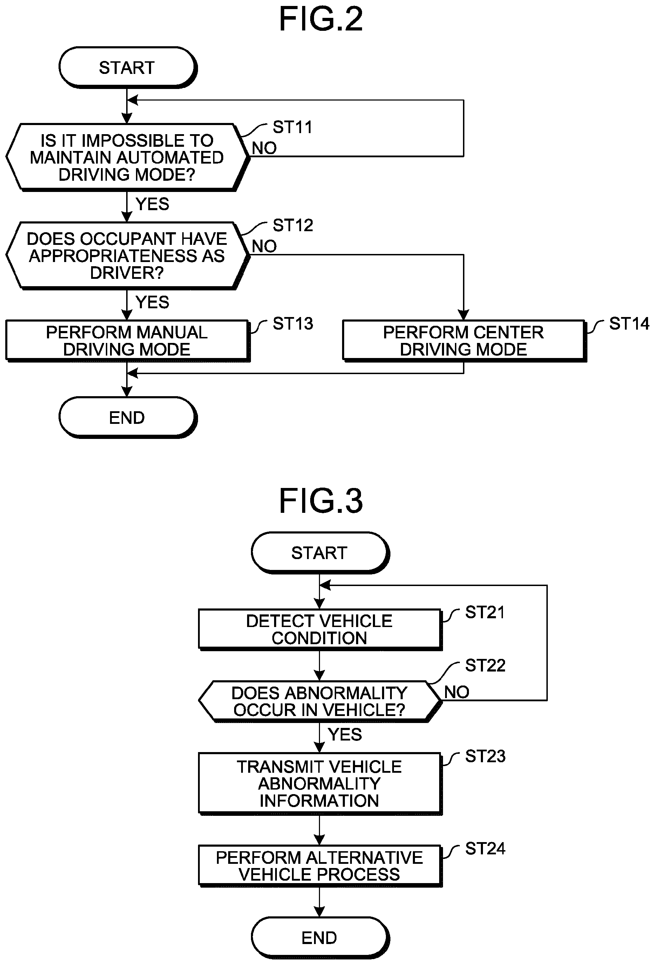

Next, an operation of the vehicle system 1 according to the embodiment will be described. FIG. 2 is a flowchart illustrating an operation flow of the vehicle system according to the embodiment. Here, switching between the driving modes by the vehicle-side control device 28 is described. In the vehicle 2 in the embodiment, the automated driving mode is performed by the vehicle-side control device 28, in principle. First, the vehicle-side control device 28 determines whether or not it is impossible to maintain the automated driving mode (Step ST11). Here, in a case where the automated driving mode is performed, the vehicle-side control device 28 determines whether or not it is not possible to maintain the automated driving mode. For example, when the vehicle-side control device 28 finds a situation in which the vehicle has no choice but to travel against the traffic rules which are set in advance, such as a case where one-side lane is restricted due to construction or the like in one-side single lane road and the vehicle needs to travel on an opposite lane that is not restricted following an instruction of a guide, a situation in which an actual condition of a road on the basis of the vehicle surrounding information does not match map information, a situation in which it is difficult to recognize a lane or a road on the basis of the vehicle surrounding information, or the like, the vehicle-side control device determines that it is impossible to maintain the automated driving mode.

Next, when the vehicle-side control device 28 determines that it is impossible to maintain the automated driving mode (Step ST11: Yes), the vehicle-side control device 28 determines whether or not the occupant 200 has the appropriateness as a driver (Step ST12). Here, the vehicle-side control device 28 determines the appropriateness of the occupant 200, that is, whether or not the occupant 200 can take over driving from automated driving as a driver, on the basis of the biological information and the ID information. In addition, the vehicle-side control device 28 determines that it is possible to maintain the automated driving mode (Step ST11: No), the vehicle-side control device repeats Step ST11 and continues the automated driving mode until it is not possible to maintain the automated driving mode.

Next, when the vehicle-side control device 28 determines that the occupant 200 has the appropriateness as a driver (Step ST12: Yes), the vehicle-side control device 28 performs the mode change to the manual driving mode (Step ST13). Here, in a case where the occupant 200 can take over the driving from the automated driving as a driver, the vehicle-side control device 28 performs the mode change from the automated driving mode to the manual driving mode, and the occupant 200 operates the vehicle-side operation device 22. In this manner, the vehicle-side control device 28 controls the vehicle traveling device 23 on the basis of the operation amount.

In addition, when the vehicle-side control device 28 determines that the occupant 200 does not have the appropriateness as a driver (Step ST12: No), the vehicle-side control device 28 performs the mode change to the center driving mode (Step ST14). Here, in a case where the occupant 200 cannot take over the driving from the automated driving as a driver, the vehicle-side control device 28 performs the mode change from the automated driving mode to the center driving mode, and the remote operator 300 operates the remote operation device 32. In this manner, the center-side control device 33 controls the vehicle traveling device 23 on the basis of the operation amount via the vehicle-side control device 28.

As described above, in the vehicle system 1 according to the embodiment, in a case where the occupant 200 does not have appropriateness as a driver, the mode change is performed from the automated driving mode to the center driving mode, and the center-side control device 33 controls the traveling condition of the vehicle 2. Therefore, even in a case where the occupant 200 does not have appropriateness as a driver, it is possible to continue driving of the vehicle 2.

In addition, in the center driving mode, the vehicle 2 is subjected to remote operation by the remote operator, and thus it is possible to smoothly drive the vehicle 2 by appropriately responding to a change in interior and exterior situation of the vehicle 2, in the same manner as in the manual driving mode. Hence, in a case or the like where it is not possible to maintain the automated driving mode temporarily, and a time taken to switch to the manual driving mode is short, it is possible to reduce troubles of driving by the occupant 200.

Next, the alternative vehicle process in an operation of the vehicle system 1 according to the embodiment will be described. FIG. 3 is a flowchart illustrating an operation flow of the vehicle system according to the embodiment. First, the vehicle condition detecting device 27 detects the vehicle condition of the vehicle 2 (Step ST21).

Next, the vehicle-side control device 28 determines whether or not abnormality occurs in the vehicle 2 on the basis of the detected vehicle condition (Step ST22). Here, the vehicle-side control device 28 determines whether or not it is possible to perform all of the driving modes on the basis of the input vehicle condition information. The vehicle-side control device 28 determines whether or not it is not possible for the vehicle 2 to travel or it is difficult for the vehicle to travel due to an accident, malfunction, degradation of a battery, or the like on the basis of the input vehicle condition information.

Next, when the DCM 24 determines that abnormality occurs in the vehicle 2 on the basis of the detected vehicle condition (Step ST22: Yes), the DCM 24 transmits vehicle abnormality information to the control center 3 (Step ST23). Here, the vehicle-side control device 28 causes the control center 3 to acquire the vehicle abnormality information via the DCM 24 and the center-side communication device 31. Incidentally, when the vehicle-side control device 28 determines that abnormality occurs in the vehicle, the vehicle-side control device performs a stopping process of stopping the vehicle 2 on the roadside. In addition, when the vehicle-side control device 28 determines that the vehicle 2 is normal (Step ST22: No), the vehicle-side control device repeats Step ST21 until abnormality occurs in the vehicle 2.

Next, when the center-side control device 33 acquires the vehicle abnormality information, the center-side control device 33 performs the alternative vehicle process (Step ST24). Here, the center-side control device 33 performs the alternative vehicle process and causes another vehicle 2 to travel toward the vehicle 2, in which abnormality is detected, through the automated driving.

As described above, in the vehicle system 1 according to the embodiment, in a case where abnormality occurs in the vehicle 2 and it is difficult for the vehicle to travel, another vehicle 2 is dispatched by the control center 3 with respect to the vehicle 2 in which abnormality occurs. Hence, the occupant 200 of the vehicle 2, in which abnormality occurs, can get on the other vehicle 2 that reaches a position close to the vehicle 2, in which abnormality occurs, through the automated driving and can continue moving by the vehicle 2. Consequently, even when the occupant 200 does not have the appropriateness as a driver, the occupant 200 can continue moving by the vehicle 2.

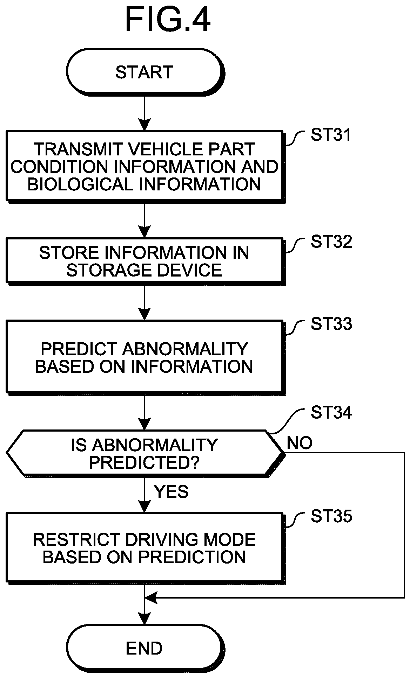

Next, the change in driving mode after abnormality is predicted in the operation of the vehicle system 1 according to the embodiment will be described. FIG. 4 is a flowchart illustrating an operation flow of the vehicle system according to the embodiment. First, the DCM 24 transmits the vehicle part condition information and the biological information to the control center 3 (Step ST31). Here, the vehicle-side control device 28 causes the control center 3 to acquire at least the vehicle part condition information, the biological information, and the vehicle condition information via the DCM 24 and the center-side communication device 31.

Next, the storage device 34 stores the vehicle part condition information and the biological information (Step ST32). Here, the storage device 34 stores at least the vehicle part condition information, the biological information, and the vehicle condition information acquired by the control center 3.

Next, the abnormality predicting device 35 predicts abnormality on the basis of the information (Step ST33). Here, the abnormality predicting device 35 predicts abnormality of the vehicle part on the basis of the vehicle part condition information. In addition, the abnormality predicting device 35 predicts abnormality of the occupant on the basis of the biological information.

Next, the abnormality predicting device 35 determines whether or not abnormality is predicted (Step ST34). Here, the abnormality predicting device 35 determines whether or not abnormality of the vehicle part is predicted. In addition, the abnormality predicting device 35 determines whether or not abnormality of the occupant is predicted.

Next, when the vehicle-side control device 28 determines that the abnormality predicting device 35 predicts abnormality (Step ST34: Yes), the vehicle-side control device 28 restricts the driving mode on the basis of the prediction (Step ST35). Here, when the vehicle-side control device 28 determines that the abnormality predicting device 35 predicts abnormality of the vehicle part, the vehicle-side control device 28 restricts the automated driving mode. Hence, in a case where the automated driving mode is performed, the vehicle-side control device 28 performs the mode change from the automated driving mode to the manual driving mode or the center driving mode when abnormality of the vehicle part is predicted. When the vehicle-side control device 28 determines that the abnormality predicting device 35 predicts abnormality of the occupant, the vehicle-side control device 28 restricts the manual driving mode. Hence, in a case where the manual driving mode is performed, the vehicle-side control device 28 performs the mode change from the manual driving mode to the automated driving mode or the center driving mode when abnormality of the occupant is predicted.

As described above, in the vehicle system 1 according to the embodiment, the vehicle part is always monitored, and thereby it is possible to restrict the automated driving mode before the automated driving mode is not performed due to an actual occurrence of abnormality in the vehicle part. In this manner, it is possible to perform the mode change to another driving mode. In addition, in the vehicle system 1 according to the embodiment, the occupant 200 is always monitored, and thereby it is possible to restrict the manual driving mode before the manual driving mode is not performed due to an actual occurrence of abnormality in the occupant. In this manner, it is possible to perform the mode change to another driving mode. Hence, the mode change is performed from a driving mode that is difficult to be continued due to an actual occurrence of abnormality to another driving mode before the abnormality occurs, and thus it is possible to continuously drive the vehicle 2 even when the abnormality occurs.

Incidentally, in the embodiment, the center-side control device 33 controls the vehicle traveling device 23 via the vehicle-side control device 28, on the basis of the operation amount of an operation of the remote operation device 32 by the remote operator 300 in the center driving mode; however, the embodiment is not limited thereto. Here, in the center driving mode, the vehicle traveling device 23 may be controlled via the vehicle-side control device 28, on the basis of the operation amount calculated by the center-side control device 33, on the basis of information (that may contain information acquired from another vehicle 2) acquired from the vehicle 2 in which the mode change from the automated driving mode to the center driving mode is performed. In this case, the center driving mode is performed on the basis of more information than the information that is used when the automated driving mode is performed, and thus driving may continue in the automated driving mode, or the stopping process of stopping the vehicle 2 on the roadside may be performed in a case where it is not possible to continue driving in the automated driving mode.

### Reference Signs List

- 1: VEHICLE SYSTEM
- 2: VEHICLE
- 21: OCCUPANT APPROPRIATENESS DETECTING DEVICE
- 22: VEHICLE-SIDE OPERATION DEVICE
- 23: VEHICLE TRAVELING DEVICE
- 24: VEHICLE-SIDE COMMUNICATION DEVICE (DCM)
- 25: EXTERNAL VEHICLE SENSOR
- 26: GPS
- 27: VEHICLE CONDITION DETECTING DEVICE
- 27a: VEHICLE PART CONDITION DETECTING DEVICE
- 28: VEHICLE-SIDE CONTROL DEVICE
- 3: CONTROL CENTER
- 31: CENTER-SIDE COMMUNICATION DEVICE
- 32: REMOTE OPERATION DEVICE
- 33: CENTER-SIDE CONTROL DEVICE
- 34: STORAGE DEVICE
- 35: ABNORMALITY PREDICTING DEVICE
- 200: OCCUPANT
- 300: REMOTE OPERATOR

## Claims

1. A vehicle system (1) comprising:
one or more vehicles (2) that include
an occupant appropriateness detecting device (21) that detects appropriateness of an occupant (200) as a driver,
a vehicle-side operation device (22) that is operated by the occupant (200) for driving the vehicle (2),
a vehicle-side control device (28) that controls a traveling condition of the vehicle (2),
a vehicle-side communication device (24) that transmits and receives information to and from outside of the vehicle (2), and
a control center (3) that is provided outside of the vehicle (2) and includes
a center-side communication device (31) that transmits and receives information to and from the vehicle (2), and
a center-side control device (33) that controls the traveling condition of the vehicle (2) via the vehicle-side control device (28), wherein
the vehicle-side control device (28) controls the traveling condition of the vehicle (2) in any driving mode of
a manual driving mode of controlling the traveling condition of the vehicle (2) through an operation of the vehicle-side operation device (22) by the occupant (200),
an automated driving mode of controlling the traveling condition of the vehicle (2) without an operation of the vehicle-side operation device (22) by the occupant (200), and
a center driving mode of controlling the traveling condition of the vehicle (2) by the center-side control device (33), and
in a case where a mode change is performed from the automated driving mode to the manual driving mode, the mode change is performed to the manual driving mode in the case of determining that the occupant (200) detected by the occupant (200) appropriateness detecting device (21) has appropriateness as a driver, and the mode change is performed to the center driving mode in the case of determining that the occupant (200) does not have appropriateness as a driver,
**characterized by** a vehicle condition detecting device (27) that detects a condition of the vehicle (2)
and **characterized in that** the vehicle-side control device (28) determines abnormality of the vehicle (2) based on the condition of the vehicle (2) detected by the vehicle condition detecting device (27),
the vehicle-side communication device (24) transmits vehicle abnormality information to the control center (3) when the vehicle-side control device (28) determines that the vehicle (2) is abnormal, and
when the center-side control device (33) acquires the vehicle abnormality information, the center-side control device (33) transmits positional information of the vehicle (2), in which the abnormality is detected, to another vehicle (2) different from the vehicle (2), in which the abnormality is detected, and performs an alternative vehicle process of causing the vehicle-side control device (28) of the other vehicle (2) to perform the automated driving mode based on the positional information of the vehicle (2) in which the abnormality is detected.

2. The vehicle system (1) according to claim 1, wherein
the control center (3) includes a remote operation device (32) with which a remote operator (300) operates the vehicle (2), and
the center-side control device (33) controls the traveling condition of the vehicle (2) based on an operation amount of an operation of the vehicle (2) by the remote operator (300) using the remote operation device (32) in the center driving mode.

3. The vehicle system (1) according to claim 1 or 2, wherein
the vehicle (2) includes a vehicle part condition detecting device (27a) that detects a condition of a vehicle part that configures the vehicle (2),
the vehicle-side communication device (24) transmits at least vehicle part condition information indicating the condition of the vehicle part detected by the vehicle part condition detecting device (27a) to the control center (3),
the control center (3) includes
a storage device (34) that stores the vehicle part condition information in at least the one or more vehicles (2), and
a vehicle part abnormality predicting device (35) that predicts abnormality of the vehicle part based on the vehicle part condition information that is stored in the storage device (34), and
the vehicle-side control device (28) performs a mode change from the automated driving mode to the manual driving mode or the center driving mode in a case where the vehicle part abnormality predicting device (35) predicts abnormality of the vehicle part.

4. The vehicle system (1) according to any one of claims 1 to 34, wherein
the occupant appropriateness detecting device (21) detects at least biological information of the occupant (200),
the vehicle-side communication device (24) transmits at least the biological information detected by the occupant appropriateness detecting device (21) to the control center (3),
the control center (3) includes
a storage device (34) that stores the biological information in at least the one or more vehicles (2), and
an occupant abnormality predicting device (35) that predicts abnormality of the occupant (200) based on the biological information that is stored in the storage device (34), and
the vehicle-side control device (28) performs a mode change from the manual driving mode to the automated driving mode or the center driving mode in a case where the occupant abnormality predicting device (35) predicts abnormality of the occupant (200).

## Patentansprüche

1. Fahrzeugsystem (1), umfassend:
ein oder mehrere Fahrzeuge (2), umfassend:
eine Insasseneignungs-Erfassungsvorrichtung (21), die die Eignung eines Insassen (200) als Fahrer erfasst,
eine fahrzeugseitige Betätigungsvorrichtung (22), die von dem Insassen (200) zum Führen des Fahrzeugs (2) betätigt wird,
eine fahrzeugseitige Steuervorrichtung (28), die einen Fahrzustand des Fahrzeugs (2) steuert,
eine fahrzeugseitige Kommunikationsvorrichtung (24), die Informationen von und nach außerhalb des Fahrzeugs (2) sendet und empfängt, und
ein Steuerzentrum (3), das außerhalb des Fahrzeugs (2) vorgesehen ist und umfasst:
eine zentralseitige Kommunikationsvorrichtung (31), die Informationen zu und von dem Fahrzeug (2) sendet und empfängt, und
eine zentralseitige Steuervorrichtung (33), die den Fahrzustand des Fahrzeugs (2) über die fahrzeugseitige Steuervorrichtung (28) steuert, wobei
die fahrzeugseitige Steuervorrichtung (28) den Fahrzustand des Fahrzeugs (2) in einem beliebigen Fahrmodus steuert, von:
einem manuellen Fahrmodus des Steuerns des Fahrzustands des Fahrzeugs (2) durch eine Betätigung der fahrzeugseitigen Betätigungsvorrichtung (22) durch den Insassen (200),
einem automatischen Fahrmodus des Steuerns des Fahrzustands des Fahrzeugs (2) ohne eine Betätigung der fahrzeugseitigen Betätigungsvorrichtung (22) durch den Insassen (200), und
einem Mittenfahrmodus des Steuerns des Fahrzustandes des Fahrzeugs (2) durch die zentralseitige Steuervorrichtung (33), und
in einem Fall, in dem ein Moduswechsel von dem automatisierten Fahrmodus in den manuellen Fahrmodus ausgeführt wird, der Moduswechsel in den manuellen Fahrmodus ausgeführt wird, wenn festgestellt wird, dass der Insasse (200), der von der Insassen- (200) Eignungserfassungsvorrichtung (21) erfasst wird, eine Eignung als Fahrer hat, und der Moduswechsel in den Mittenfahrmodus ausgeführt wird, wenn festgestellt wird, dass der Insasse (200) keine Eignung als Fahrer hat,
**gekennzeichnet durch** eine Fahrzeugzustands-Erfassungsvorrichtung (27), die einen Zustand des Fahrzeugs (2) erfasst
und **dadurch gekennzeichnet, dass**
die fahrzeugseitige Steuervorrichtung (28) eine Anomalie des Fahrzeugs (2) auf der Grundlage des Zustands des Fahrzeugs (2) bestimmt, der von der Fahrzeugzustands-Erfassungsvorrichtung (27) erfasst wird,
die fahrzeugseitige Kommunikationsvorrichtung (24) Informationen über Fahrzeuganomalien an das Steuerzentrum (3) sendet, wenn die fahrzeugseitige Steuervorrichtung (28) bestimmt, dass das Fahrzeug (2) anormal ist, und
wenn die zentralseitige Steuervorrichtung (33) die Informationen über die Fahrzeuganomalie erfasst, die zentralseitige Steuervorrichtung (33) Positionsinformationen des Fahrzeugs (2), in dem die Anomalie erfasst wird, an ein anderes Fahrzeug (2) sendet, das sich von dem Fahrzeug (2), in dem die Anomalie erkannt wird, unterscheidet, und einen alternativen Fahrzeugvorgang ausführt, bei dem die fahrzeugseitige Steuervorrichtung (28) des anderen Fahrzeugs (2) veranlasst wird, den automatisierten Fahrmodus auf der Grundlage der Positionsinformationen des Fahrzeugs (2), in dem die Anomalie erkannt wird, durchzuführen.

2. Fahrzeugsystem (1) nach Anspruch 1, bei dem
das Steuerzentrum (3) eine Fernbedienungsvorrichtung (32) enthält, mit der eine entfernte Bedienperson (300) das Fahrzeug (2) bedient, und
die zentralseitige Steuervorrichtung (33) den Fahrzustand des Fahrzeugs (2) auf der Grundlage eines Betätigungsumfangs einer Betätigung des Fahrzeugs (2) durch die entfernte Bedienperson (300) unter Verwendung der Fernbedienungsvorrichtung (32) in dem Mitten-Fahrmodus steuert.

3. Fahrzeugsystem (1) nach Anspruch 1 oder 2, bei dem
das Fahrzeug (2) eine Fahrzeugteil-Zustandserfassungsvorrichtung (27a) umfasst, die einen Zustand eines Fahrzeugteils erfasst, der das Fahrzeug (2) konfiguriert,
die fahrzeugseitige Kommunikationsvorrichtung (24) wenigstens Fahrzeugteil-Zustandsinformationen, die den von der Fahrzeugteil-Zustandserfassungsvorrichtung (27a) erfassten Zustand des Fahrzeugteils anzeigen, an das Steuerzentrum (3) sendet,
wobei das Steuerzentrum (3) umfasst:
eine Speichervorrichtung (34), die die Fahrzeugteil-Zustandsinformationen in wenigstens einem oder mehreren Fahrzeugen (2) speichert, und
eine Fahrzeugteil-Anomalie-Vorhersagevorrichtung (35), die eine Anomalie des Fahrzeugteils auf der Grundlage der in der Speichervorrichtung (34) gespeicherten Fahrzeugteil-Zustandsinformationen vorhersagt, und
die fahrzeugseitige Steuervorrichtung (28) einen Moduswechsel von dem automatischen Fahrmodus zu dem manuellen Fahrmodus oder dem Mittenfahrmodus in einem Fall durchführt, in dem die Fahrzeugteil-Anomalie-Vorrichtung (35) eine Anomalie des Fahrzeugteils vorhersagt.

4. Fahrzeugsystem (1) nach einem der Ansprüche 1 bis 4, bei dem
die Insasseneignungs-Erfassungsvorrichtung (21) wenigstens biologische Informationen des Insassen (200) erfasst,
die fahrzeugseitige Kommunikationsvorrichtung (24) wenigstens die von der Insassen-Eignungserfassungsvorrichtung (21) erfassten biologischen Informationen an das Steuerzentrum (3) sendet,
wobei das Steuerzentrum (3) umfasst:
eine Speichervorrichtung (34), die die biologischen Informationen in wenigstens einem oder mehreren Fahrzeugen (2) speichert, und
eine Insassen-Anomalie-Vorhersagevorrichtung (35), die Anomalien des Insassen (200) auf der Grundlage der in der Speichervorrichtung (34) gespeicherten biologischen Informationen vorhersagt, und
die fahrzeugseitige Steuervorrichtung (28) einen Moduswechsel von dem manuellen Fahrmodus zu dem automatischen Fahrmodus oder dem Mitten-Fahrmodus in einem Fall ausführt, in dem die Insassen-Anomalie-Vorhersagevorrichtung (35) eine Anomalie des Insassen (200) vorhersagt.

## Revendications

1. Système de véhicule (1) comprenant :
un ou des véhicules (2) qui comprennent
un dispositif de détection d'aptitude d'occupant (21) qui détecte l'aptitude d'un occupant (200) en tant que conducteur,
un dispositif de manoeuvre côté véhicule (22) qui est manœuvré par l'occupant (200) pour conduire le véhicule (2)
un dispositif de commande côté véhicule (28) qui commande un état de déplacement du véhicule (2),
un dispositif de communication côté véhicule (24) qui transmet et reçoit des informations vers et depuis l'extérieur du véhicule (2), et
un centre de commande (3) qui est situé à l'extérieur du véhicule (2) et comprend
un dispositif de communication côté centre (31) qui transmet et reçoit des informations vers et depuis le véhicule (2), et
un dispositif de commande côté centre (33) qui commande l'état de déplacement du véhicule (2) par l'intermédiaire du dispositif de commande côté véhicule (28), dans lequel
le dispositif de commande côté véhicule (28) commande l'état de déplacement du véhicule (2) dans n'importe quel mode de conduite entre
un mode de conduite manuel consistant à commander l'état de déplacement du véhicule (2) par manœuvre du dispositif de manœuvre côté véhicule (22) par l'occupant (200),
un mode de conduite automatique consistant à commander l'état de déplacement du véhicule (2) sans manœuvre du dispositif de manœuvre côté véhicule (22) par l'occupant (200), et
un mode de conduite centralisé consistant à commander l'état de déplacement du véhicule (2) par le dispositif de commande côté centre (33), et
dans le cas où un changement de mode est effectué pour passer du mode de conduite automatique au mode de conduite manuel, le changement de mode est effectué pour passer au mode de conduite manuel lorsqu'il est déterminé que l'occupant (200) détecté par le dispositif (21) de détection d'aptitude d'occupant (200) présente une aptitude en tant que conducteur, et le changement de mode est effectué pour passer au mode de conduite centralisé lorsqu'il est déterminé que l'occupant (200) ne présente pas d'aptitude en tant que conducteur,
**caractérisé par** un dispositif de détection d'état de véhicule (27) qui détecte un état du véhicule (2),
et **caractérisé en ce que**
le dispositif de commande côté véhicule (28) détermine une anomalie du véhicule (2) en fonction de l'état du véhicule (2) détecté par le dispositif de détection d'état de véhicule (27),
le dispositif de communication côté véhicule (24) transmet des informations d'anomalie de véhicule au centre de commande (3) lorsque le dispositif de commande côté véhicule (28) détermine que le véhicule (2) présente une anomalie, et
lorsque le dispositif de commande côté centre (33) obtient les informations d'anomalie de véhicule, le dispositif de commande côté centre (33) transmet des informations de position du véhicule (2) dans lequel l'anomalie est détectée à un autre véhicule (2) différent du véhicule (2) dans lequel l'anomalie est détectée, et exécute un processus de véhicule alternatif consistant à faire exécuter par le dispositif de commande côté véhicule (28) de l'autre véhicule (2) le mode de conduite automatique sur la base des informations de position du véhicule (2) dans lequel l'anomalie est détectée.

2. Système de véhicule (1) selon la revendication 1, dans lequel
le centre de commande (3) comprend un dispositif de manœuvre à distance (32) grâce auquel un opérateur distant (300) manœuvre le véhicule (2), et
le dispositif de commande côté centre (33) commande l'état de déplacement du véhicule (2) en fonction d'une quantité de manœuvre du véhicule (2) par l'opérateur distant (300) en utilisant le dispositif de manœuvre à distance (32) dans le mode de conduite centralisé.

3. Système de véhicule (1) selon la revendication 1 ou 2, dans lequel
le véhicule (2) comprend un dispositif de détection d'état d'une partie de véhicule (27a) qui détecte un état d'une partie de véhicule qui configure le véhicule (2),
le dispositif de communication côté véhicule (24) transmet au moins des informations d'état de partie de véhicule indiquant l'état de la partie de véhicule détecté par le dispositif de détection d'état de partie de véhicule (27a) au centre de commande (3),
le centre de commande (3) comprend
un dispositif d'enregistrement (34) qui enregistre les informations d'état de partie de véhicule au moins dans le véhicule ou dans plusieurs véhicules (2), et
un dispositif de prédiction d'anomalie de partie de véhicule (35) qui prédit une anomalie de la partie de véhicule en fonction des informations d'état de partie de véhicule qui sont enregistrées dans le dispositif d'enregistrement (34), et
le dispositif de commande côté véhicule (28) effectue un changement de mode pour passer du mode de conduite automatique au mode de conduite manuel ou au mode de conduite centralisé dans le cas où le dispositif de prédiction d'anomalie de partie de véhicule (35) prédit une anomalie de la partie de véhicule.

4. Système de véhicule (1) selon l'une quelconque des revendications 1 à 34, dans lequel
le dispositif de détection d'aptitude d'occupant (21) détecte au moins des informations biologiques de l'occupant (200),
le dispositif de communication côté véhicule (24) transmet au moins les informations biologiques détectées par le dispositif de détection d'aptitude d'occupant (21) au centre de commande (3),
le centre de commande (3) comprend
un dispositif d'enregistrement (34) qui enregistre les informations biologiques au moins dans le véhicule ou dans plusieurs véhicules (2), et
un dispositif de prédiction d'anomalie d'occupant (35) qui prédit une anomalie de l'occupant (200) en fonction des informations biologiques qui sont enregistrées dans le dispositif d'enregistrement (34), et
le dispositif de commande côté véhicule (28) effectue un changement de mode pour passer du mode de conduite manuel au mode de conduite automatique ou au mode de conduite centralisé dans le cas où le dispositif de prédiction d'anomalie d'occupant (35) prédit une anomalie de l'occupant (200).
